# EUROPEAN PATENT APPLICATION

(11) **EP 3 603 867 A1**
(43) Date of publication of application: **05.02.2020**
(21) Application number: 18775106.0
(22) Date of filing: 27.03.2018
(51) Int. Cl.: B23K 11/06

(54) **WELDING DETERMINATION DEVICE FOR BELT-SHAPED SHEETS, AND WELDING DETERMINATION METHOD**

(30) Priority: 31.03.2017 JP 2017070539
(71) Applicant: JFE Steel Corporation, Tokyo 100-0011 (JP); Primetals Technologies Japan, Ltd., Hiroshima-shi, Hiroshima 733-8553 (JP)
(72) Inventor: OKI Yuichiro, Tokyo 100-0011 (JP); SAKUMOTO Motoaki, Tokyo 100-0011 (JP); NAKAYA Takafumi, Hiroshima-shi Hiroshima 733-8553 (JP); MITSUOKA Ryosuke, Hiroshima-shi Hiroshima 733-8553 (JP); MITSUZUMI Tatsuki, Hiroshima-shi Hiroshima 733-8553 (JP)
(74) Representative: Hoffmann Eitle
(86) International application number: PCT/JP2018/012580
(87) International publication number: WO 2018/181398

(57) **Abstract**

The purpose of this invention is to determine occurrence of expulsion in seam welding with high accuracy. A welding determination device includes: a measurement unit (11) configured to measure temperature of a joint portion between strip-shaped sheets (for example, steel strips (2)) to be joined by seam welding; and a determination unit (13) configured to, based on a measurement result by the measurement unit (11), calculate an average temperature Tₐᵥₑ and a temperature difference ΔT of the joint portion and, when the average temperature Tₐᵥₑ is more than or equal to a first threshold value that is set according to the sheet thickness of each of the strip-shaped sheets and the temperature difference ΔT is less than or equal to a second threshold value, determine that expulsion has occurred at the joint portion.

## Description

### Technical Field

The present disclosure relates to a welding determination device and a welding determination method for strip-shaped sheets regarding a joint portion between strip-shaped sheets to be joined by seam welding.

### Background Art

In production lines that produce and process strip-shaped sheets, such as steel strips, strip-shaped sheets are produced by hot rolling or cold rolling a steel ingot or the like. In such production lines, when preliminary treatment, such as pickling, application of rust preventive oil, and the like are applied to strip-shaped sheets, individually applying the respective processing to the respective strip-shaped sheets is low in production efficiency and impractical. Therefore, a method is used in which, by continuously connecting end portions in the longitudinal direction of respective strip-shaped sheets to each other by means of welding, the above-described processing is performed in a continuous manner.

As a welding method of strip-shaped sheets, seam welding, which is a type of lap resistance welding, is generally used. In the seam welding, by, while rotating a pair of electrode rolls, flowing electric current through a joint portion where end portions of strip-shaped sheets are lapped over each other, the strip-shaped sheets are continuously welded. In such a seam welding, there is a possibility that a joining defect occurs on the joint portion, and there have been cases where a joint portion is ruptured due to a joining defect in a production line and the production line is thereby stopped. A stop of a production line because of a rupture of strip-shaped sheets has a significant effect, such as, in addition to causing an operating rate of the production line to be reduced, causing restoration of the production line to require substantially long time and a repair cost associated with repairs to increase.

In consideration of such a problem, for example, PTL 1 discloses, as a welding determination method of steel strips that are strip-shaped sheets, a method of measuring temperature of a welded portion immediately after welding and determining a joining defect from the measured temperature and a threshold value according to an overlap thickness of the steel strips.

### Citation List

### Patent Literature

PTL 1: JP 63-203285 A

### Summary of Invention

### Technical Problem

Meanwhile, in welding by means of seam welding, expulsion that is a phenomenon in which a base material is melted and scattered sometimes occurs and causes a joining defect. When expulsion occurs, temperature of a joint portion immediately after welding increases. However, when occurrence of expulsion is to be determined by determining whether or not temperature of the joint portion is in a predetermined temperature range as described in PTL 1, it has been difficult to perform such determination with high accuracy.

Accordingly, the present invention has been made in view of the problem described above, and an object of the present invention is to provide a welding determination device and a welding determination method for strip-shaped sheets that are capable of determining occurrence of expulsion in seam welding with high accuracy.

### Solution to Problem

According to one aspect of the present invention, a welding determination device for strip-shaped sheets is provided that includes a measurement unit configured to measure temperature of a joint portion between strip-shaped sheets to be joined by seam welding; and a determination unit configured to, based on a measurement result by the measurement unit, calculate an average temperature and a temperature difference of the joint portion and, when the average temperature is more than or equal to a first threshold value that is set according to a sheet thickness of each of the strip-shaped sheets and the temperature difference is less than or equal to a second threshold value, determine that expulsion has occurred at the joint portion.

According to another aspect of the present invention, a welding determination method for strip-shaped sheets is provided that includes a measurement step of measuring temperature of a joint portion between strip-shaped sheets to be joined by seam welding; a calculation step of, based on a measurement result in the measurement step, calculating an average temperature and a temperature difference of the joint portion; and a determination step of, when the average temperature is more than or equal to a first threshold value that is set according to a sheet thickness of each of the strip-shaped sheets and the temperature difference is less than or equal to a second threshold value, determining that expulsion has occurred at the joint portion.

### Advantageous Effects of Invention

The one aspect of the present invention enables occurrence of expulsion in seam welding to be determined with high accuracy.

### Brief Description of Drawings

FIG. 1 is an explanatory diagram illustrative of a welding determination device for strip-shaped sheets according to an embodiment of the present invention;
FIG. 2 is an explanatory diagram illustrative of a welding method of steel strips by seam welding;
FIG. 3 is a flowchart illustrative of a welding determination method for strip-shaped sheets according to the embodiment of the present invention; and
FIG. 4 is a graph illustrative of a measurement result of temperature of a joint portion when expulsion occurred.

### Description of Embodiments

In the following detailed description, a number of specific details are described to provide full understanding of the embodiments of the present invention. However, it will be apparent that one or more embodiments can be carried out even in absence of such specific details. In addition, for the simplicity of drawings, known structures and devices are schematically illustrated.

### <Device Configuration>

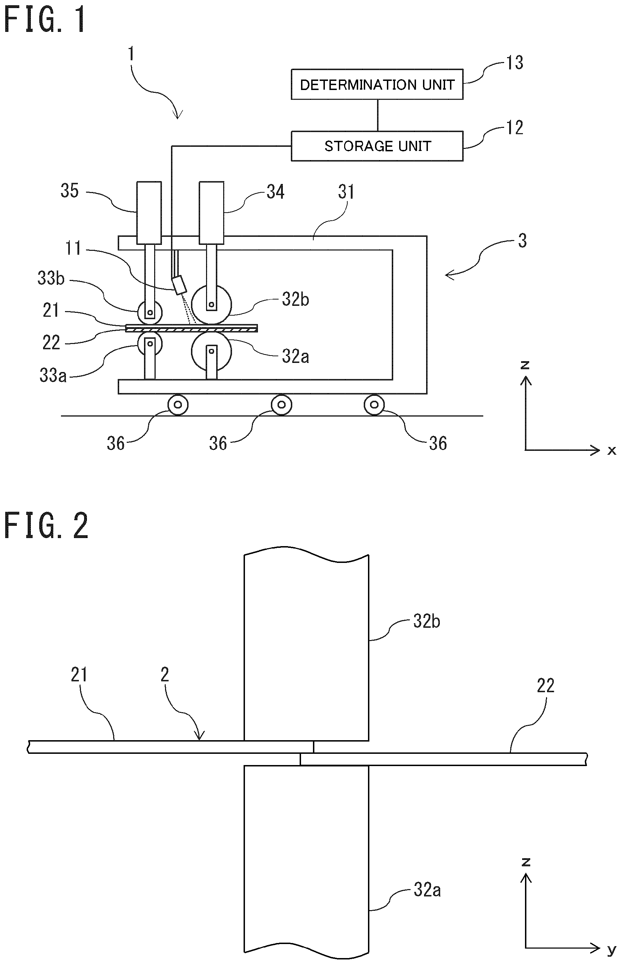

First, with reference to FIGS. 1 and 2, a configuration of a welding determination device 1 according to an embodiment of the present invention will be described. The welding determination device 1 of the present embodiment is a device that determines a joining defect at a joint portion between steel strips 2, which are strip-shaped sheets . In the present embodiment, as illustrated in FIGS. 1 and 2, the steel strips 2 are made up of a preceding strip 21 that is a steel strip first input to a production line, such as a pickling line, and a succeeding strip 22 that is a steel strip input to the production line after the preceding strip 21. In such a production line, a tail end portion of the preceding strip 21 and a front end portion of the succeeding strip 22 are joined through welding by a seam welding machine 3 and the preceding strip 21 and the succeeding strip 22 are thereby made into a continuous single steel strip 2, to which processing according to purposes, such as pickling, is applied.

The seam welding machine 3 includes a frame body 31, a pair of electrode rolls 32a and 32b, a pair of swaging rolls 33a and 33b, two pressurizing cylinders 34 and 35, and a plurality of wheels 36.

The frame body 31 has a U-shaped shape with right-angled corners in front view illustrated in FIG. 1 and has a U-shaped groove arranged extending in parallel with the x-axis direction (the right and left direction with respect to the plane of paper in FIG. 1 and the horizontal direction parallel with the ground).

The pair of electrode rolls 32a and 32b are roll-shaped electrodes and are disposed facing each other in the z-axis direction (the up and down direction with respect to the plane of paper in FIG. 1 and the vertical direction perpendicular to the ground) inside the U-shaped groove of the frame body 31. The pair of electrode rolls 32a and 32b are respectively connected to not-illustrated drive motors and are configured to be, provided with driving force of the drive motors, rotatable in the circumferential directions of the roll shapes thereof in the x-z plane. The pair of electrode rolls 32a and 32b are also connected to a not-illustrated power supply device. The electrode roll 32a is arranged on the z-axis negative direction side and is fixed to the frame body 31. The electrode roll 32b is arranged on the z-axis positive direction side and is fixed to the frame body 31 via the pressurizing cylinder 34. In addition, the electrode roll 32b is configured to be movable in the z-axis direction by the pressurizing cylinder 34.

The pair of swaging rolls 33a and 33b are press-down rolls and are disposed facing each other in the z-axis direction at a position on the x-axis negative direction side of the pair of electrode rolls 32a and 32b inside the U-shaped groove of the frame body 31. The pair of swaging rolls 33a and 33b are arranged in such a way as to, tilted with respect to the x-axis and the y-axis (the directions perpendicular to the x-axis direction and the y-axis direction), cross each other, as viewed from the z-axis positive direction side. The pair of swaging rolls 33a and 33b are respectively connected to not-illustrated drive motors and are configured to be, provided with driving force of the drive motors, rotatable in the circumferential directions of the roll shapes thereof. The swaging roll 33a is arranged on the z-axis negative direction side and is fixed to the frame body 31. The swaging roll 33b is arranged on the z-axis positive direction side and is fixed to the frame body 31 via the pressurizing cylinder 35. In addition, the swaging roll 33b is configured to be movable in the z-axis direction by the pressurizing cylinder 35.

The plurality of wheels 36 are disposed aligned in the x-axis direction and the y-axis direction on the bottom surface on the z-axis negative direction side of the frame body 31 in such a way that the frame body 31 is movable in the x-axis direction.

The seam welding machine 3 has a not-illustrated motor for traveling and is configured in such a way that the frame body 31 is, provided with driving force of the motor for traveling, movable in the x-axis direction.

In seam welding by the seam welding machine 3 having the above-described configuration, welding of the steel strips 2 is performed in accordance with the following operation. First, by a side guide (not illustrated) for adjusting a position in the width direction of the steel strips 2 and a clamping device (not illustrated) for holding the steel strips 2, positions of the tail end portion of the preceding strip 21 and the front end portion of the succeeding strip 22 are adjusted to be coincident with a joint position. The joint position is, as illustrated in FIGS. 1 and 2, a position at which the central positions in the width direction (x-axis direction) of the preceding strip 21 and the succeeding strip 22 coincide with each other and the tail end of the preceding strip 21 and the front end of the succeeding strip 22 are lapped over each other with a predetermined overlapping margin (for example, of a length of approximately 1.6 mm to 3. 8 mm in the y-axis direction).

The joint portion between the steel strips 2 that is a portion where the tail end portion of the preceding strip 21 and the front end portion of the succeeding strip 22 are lapped over each other is pressed down and welded by the pair of electrode rolls 32a and 32b, and the preceding strip 21 and the succeeding strip 22 are thereby joined. In the joining by the pair of electrode rolls 32a and 32b, pressurizing and flowing electric current through the joint portion between the steel strips 2 by means of the pair of electrode rolls 32a and 32b with the joint portion between the steel strips 2 clamped between the pair of electrode rolls 32a and 32b causes the joint portion to be heated due to resistance heating of the steel strips 2 and to be flattened. Further, performing the joining by the pair of electrode rolls 32a and 32b with the frame body 31 made to travel in the width direction and the pair of electrode rolls 32a and 32b made to rotate causes the joining of the joint portion to be continuously performed over the whole width in the x-axis direction of the steel strips 2. The welding by means of the pair of electrode rolls 32a and 32b is performed with a fixed current value that is set in advance depending on a material and a sheet thickness of the steel strips 2. In the present embodiment, both pressing-down force and a current value of welding current by the pair of electrode rolls 32a and 32b are set at higher values than in general seam welding. For example, when the steel strips 2 are made of medium-carbon steel having a sheet thickness of 2 mm and a carbon content of approximately 0.30 mass% to 0.45 mass%, welding is performed at a pressing-down force of approximately 30.0 kN and a current value of approximately 40.0 kA in the present embodiment while the welding is performed at a pressing-down force of approximately 20.6 kN and a current value of approximately 17.5 kA in general seam welding.

In the seam welding by means of the seam welding machine 3, the joint portion the welding of which has been performed by the pair of electrode rolls 32a and 32b are pressed down by the pair of swaging rolls 33a and 33b. In the pressing-down by the pair of swaging rolls 33a and 33b, the joint portion immediately after the welding moves to the position of the pair of swaging rolls 33a and 33b caused by travel of the frame body 31 and, by being pressed down by the pair of swaging rolls 33a and 33b, is pressurized and pressure welded. On this occasion, since the pair of swaging rolls 33a and 33b are arranged crossing each other, the joint portion after pressing-down becomes almost flat. The pressing-down by the pair of swaging rolls 33a and 33b are, as with the pressing-down by the pair of electrode rolls 32a and 32b, performed in a continuous manner over the whole width in the x-axis direction of the steel strips 2.

In the seam welding by the seam welding machine 3, pressing-down and welding of the joint portion between the steel strips 2 by the pair of electrode rolls 32a and 32b causes the joint portion to be joined and a level difference of the joint portion to become smaller than that before pressing-down. Pressing-down of the joint portion between the steel strips 2 by the pair of swaging rolls 33a and 33b after the joining by the pair of electrode rolls 32a and 32b causes the shape of the joint portion to be flattened.

As illustrated in FIG. 1, the welding determination device 1 includes a measurement unit 11, a storage unit 12, and a determination unit 13.

The measurement unit 11 is a temperature measuring device, such as a radiation thermometer, and measures temperature of the joint portion between the steel strips 2 immediately after welding. The measurement unit 11 is fixed to the frame body of the seam welding machine 3 and is arranged at a position at which surface temperature of the joint portion immediately after the welding by the pair of electrode rolls 32a and 32b can be measured. In the present embodiment, the measurement unit 11 is disposed between the electrode roll 32a and the swaging roll 33a inside the U-shaped groove of the frame body 31, as illustrated in FIG. 1. The measurement unit 11 measures surface temperature of the joint portion immediately after welding by the pair of electrode rolls 32a and 32b in a continuous manner while the seam welding is performed and outputs measurement results to the storage unit 12 in conjunction with measurement time.

The storage unit 12 stores measurement results acquired from the measurement unit 11 in conjunction with measurement time as measurement data and outputs the measurement data to the determination unit 13.

The determination unit 13 determines whether or not expulsion has occurred at the joint portion between the steel strips 2, based on the measurement data acquired from the storage unit 12. Details of a welding determination method used by the determination unit 13 will be described later.

The storage unit 12 and the determination unit 13 are a computer constituted by an input device, an output device, a central processing unit (CPU), a main storage device (internal storage device), an auxiliary storage device (external storage device), and the like, and the main storage device and the central processing unit function as the storage unit 12 and the determination unit 13, respectively.

### <Welding Determination Method>

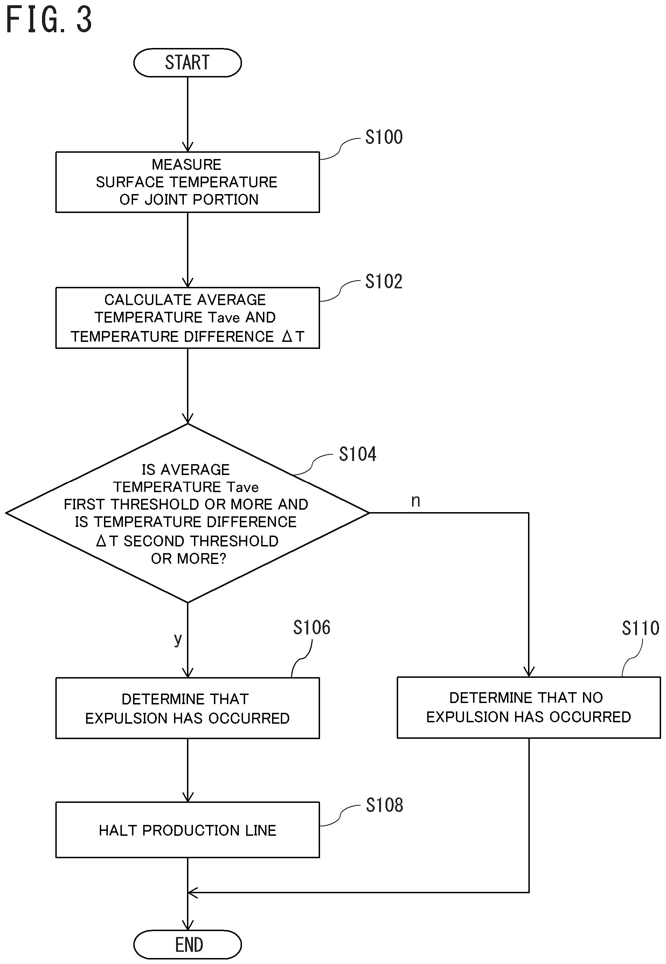

Next, with reference to FIGS. 3 and 5, a welding determination method of strip-shaped sheets according to the present embodiment will be described. As illustrated in FIG. 3, first, the measurement unit 11 measures surface temperature of the joint portion between the steel strips 2 (S100). The measurement of surface temperature in step S100 is performed in parallel with welding and pressing-down of the joint portion by the pair of electrode rolls 32a and 32b and the pair of swaging rolls 33a and 33b. The measurement unit 11 measures the surface temperature of the joint portion immediately after the joint portion has been welded by the pair of electrode rolls 32a and 32b and before the joint portion is pressed-down by the pair of swaging rolls 33a and 33b. Measurement results of temperature by the measurement unit 11 are output to the storage unit 12 and are stored in the storage unit 12 as measurement data.

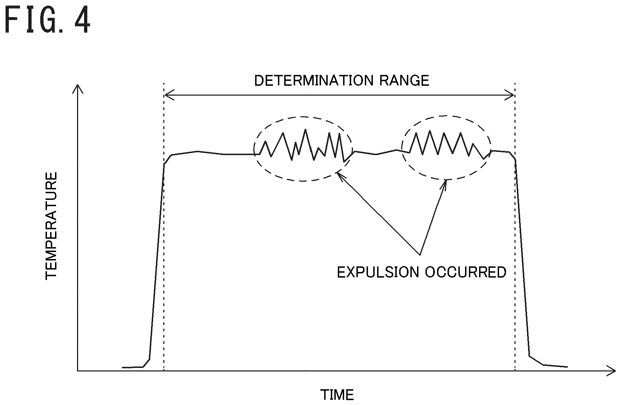

Next, after the measurement of temperature by the measurement unit 11 has been finished, the determination unit 13 calculates an average temperature Tₐᵥₑ and a temperature difference ΔT of the welded portion, based on the measurement data stored in the storage unit 12 (S102). The measurement data are temperature data associated with measurement time and are indicated as a temperature chart as illustrated in FIG. 4. In step S102, before the calculation of the average temperature Tₐᵥₑ and the temperature difference ΔT, extraction of measurement data during a determination range out of the acquired measurement data is performed. The determination range is a measurement period of time corresponding to the sheet width of the steel strips 2 and a period of time during which temperature of the welded joint portion of the steel strip 2 is measured. Specifically, a period of time from a timing at which the welded portion has moved in the width direction by a certain distance since the commencement of current flow between the pair of electrode rolls 32a and 32b to a timing at which the welded portion has moved in the width direction by the certain distance since the end of current flow serves as the determination range. The certain distance is a distance from a contact point of the pair of electrode rolls 32a and 32b to a point of measurement by the measurement unit 11. After the extraction of measurement data during the determination range has been performed, the determination unit 13 calculates, from the measurement data during the determination range, an average temperature Tₐᵥₑ and a temperature difference ΔT. Note that the average temperature Tₐᵥₑ and the temperature difference ΔT are an average value of and a difference between a maximum value and a minimum value among a plurality of pieces of temperature data in the measurement data during the determination range, respectively.

After step S102, the determination unit 13 determines whether or not the average temperature Tₐᵥₑ and the temperature difference ΔT, calculated in step S102, are more than or equal to a first threshold value and more than or equal to a second threshold value, respectively (S104).

The first threshold value is, as a value by which increase in temperature of the joint portion when expulsion occurs at the joint portion can be detected, appropriately set according to the sheet thickness of each of the steel strips 2, that is, in such a way that, as the sheet thickness increases, the first threshold value is set at a higher value. Since, when expulsion occurs, melted base material is exposed on the surface of the joint portion and the exposed high-temperature melted base material is measured by the measurement unit 11, hunting occurs in the temperature chart as illustrated in FIG. 4 and a measurement point arises at which surface temperature is higher than that in a case where welding is normally performed. For this reason, when expulsion occurs, the average temperature Tₐᵥₑ increases to a higher level than in the case where welding is normally performed. In addition, the thicker is the sheet thickness, the higher becomes the average temperature Tₐᵥₑ. In the present embodiment, the first threshold value is set according to the sheet thickness of the thicker one of the preceding strip 21 and the succeeding strip 22.

The second threshold value is set according to the material of the steel strips 2, a current value, and the like as a value by which hunting in the temperature, which occurs when expulsion occurs at the joint portion, in the temperature chart can be detected. When expulsion occurs, hunting occurs in the temperature chart illustrated in FIG. 4, as described above. For this reason, when expulsion occurs, the temperature difference ΔT in the determination range becomes larger than that in the case where the welding is normally performed.

In step S104, when the average temperature Tₐᵥₑ is more than or equal to the first threshold value and the temperature difference ΔT is more than or equal to the second threshold value, the determination unit 13 determines that, at the welded portion of the steel strips 2, expulsion has occurred (S106).

After step S106, the determination unit 13 outputs the determination result to a not-illustrated control unit that controls the production line in which the seam welding machine 3 is disposed and makes the control unit halt the production line (S108) . This operation enables the joint portion where a joining defect due to an occurrence of expulsion has been found to be prevented from rupturing and reduction in an operating rate and a cost required for restoration of the production line to be suppressed compared with a case where the production line is stopped due to a rupture at the joint portion.

On the other hand, in step S104, when the average temperature Tₐᵥₑ is less than the first threshold value or the temperature difference ΔT is less than the second threshold value, the determination unit 13 determines that, at the welded portion of the steel strips 2, no expulsion has occurred (S110) . In the case of step S110, the halt operation of the production line by the control unit is not performed, and the production line can continuously operate.

When having performed the above-described processing steps in steps S100 to S110, the determination of the welded portion in the present embodiment is finished.

### <Variation>

Although the present invention was described above with reference to a specific embodiment, the description is not intended to limit the invention. By referring to the description of the present invention, not only various variations of the disclosed embodiment but also other embodiments of the present invention are apparent to a person skilled in the art. Therefore, it should be understood that CLAIMS also include such variations or embodiments included in the scope and gist of the present invention.

For example, although, in the above-described embodiment, it was assumed that the method was applied to welding of the steel strips 2 in a pickling line, the present invention is not limited to the example. For example, the present invention can be applied to not only a production line of a steel strip but also a production line of a strip-shaped sheet made of another metal. In addition, even in the case where the strip-shaped sheet is the steel strip 2, the present invention is applicable to not only the pickling line but also other lines of the steel strip 2 in which other processing, such as cold rolling and rust prevention, is applied.

Although, in the above-described embodiment, it was assumed that the first threshold value was set according to the sheet thickness of the thicker one of the steel strips 2, the present invention is not limited to the example. The first threshold value may be set according to the sheet thickness of the overlapped preceding strip 21 and succeeding strip 22. Further, the first threshold value may be a value that is set taking into consideration, in addition to the sheet thickness, other conditions, such as the material of the steel strips 2 and a current value at the time of welding.

Further, although, in the above-described embodiment, it was assumed that occurrence of expulsion was determined with respect to a determination range corresponding to the sheet width of the steel strips 2, the present invention is not limited to the example. For example, the determination range corresponding to the sheet width, illustrated in FIG. 4, may be further partitioned into a plurality of ranges and, using the plurality of ranges as determination ranges, the processing from step S102 onward may be performed with respect to each of the plurality of ranges.

### <Advantageous Effects of Embodiment>

(1) A welding determination device 1 for strip-shaped sheets according to one aspect of the present invention includes: a measurement unit 11 configured to measure temperature of a joint portion between strip-shaped sheets (for example, steel strips 2) to be joined by seam welding; and a determination unit 13 configured to, based on a measurement result by the measurement unit 11, calculate an average temperature Tₐᵥₑ and a temperature difference ΔT of the joint portion and, when the average temperature Tₐᵥₑ is more than or equal to a first threshold value that is set according to the sheet thickness of each of the strip-shaped sheets and the temperature difference ΔT is less than or equal to a second threshold value, determine that expulsion has occurred at the joint portion.
(2) A welding determination method for strip-shaped sheets according to another aspect of the present invention includes: a measurement step (step S100) of measuring temperature of a joint portion between strip-shaped sheets (for example, steel strips 2) to be joined by seam welding; a calculation step (step S102) of, based on a measurement result in the measurement step, calculating an average temperature Tₐᵥₑ and a temperature difference ΔT of the joint portion; and a determination step (step S104) of, when the average temperature Tₐᵥₑ is more than or equal to a first threshold value that is set according to the sheet thickness of each of the strip-shaped sheets and the temperature difference ΔT is less than or equal to a second threshold value, determining that expulsion has occurred at the joint portion.

According to the configuration described in the above items (1) and (2), use of two conditions in order to detect a rise in the average temperature Tₐᵥₑ and an increase in the temperature difference ΔT due to measurement of temperature of melted base material exposed on the surface of the joint portion enables occurrence of expulsion at the joint portion to be determined with high accuracy.

When occurrence of expulsion is determined based on only either of the conditions relating to the average temperature Tₐᵥₑ and the temperature difference ΔT, the average temperature Tₐᵥₑ or the temperature difference ΔT sometimes has a similar value to that in the case of expulsion occurrence depending on conditions even when no expulsion has occurred, and it is therefore difficult to determine occurrence of expulsion with high accuracy. On the other hand, according to the configuration described in the above items (1) and (2), since expulsion is determined to have occurred when the two conditions relating to the average temperature Tₐᵥₑ and the temperature difference ΔT are satisfied, it is possible to determine whether or not expulsion has occurred with high accuracy.

In addition, according to the configuration described in the above items (1) and (2), setting the first threshold value according to the sheet thickness enables various sheet thickness values to be dealt with.

### Examples

Next, the example that the inventors carried out will be described. In the example, as with the above-described embodiment, whether or not expulsion occurred at the joint portion joined by welding was confirmed with respect to steel strips 2 having various sheet thickness values, and a relationship between occurrence of expulsion and temperature of the joint portion was investigated.

As a result of the example, it was confirmed that, when expulsion occurred, the average temperature Tₐᵥₑ of the joint portion had a tendency to increase to a higher level than in a normal case. However, it was also confirmed that, even under the condition of the same sheet thickness and no expulsion having occurred, there was a case, among variations, where the average temperature Tₐᵥₑ, depending on conditions, has approximately the same value as a lower one of average temperatures Tₐᵥₑ when expulsion has occurred. Note that, in the example, it was confirmed that, when the sheet thickness of the thicker one of strip-shaped sheets is less than or equal to 1.5 mm, more than 1.5 mm and less than or equal to 1.8 mm, more than 1.8 mm and less than or equal to 2.1 mm, more than 2.1 mm and less than or equal to 2.5 mm, more than 2.5 mm and less than or equal to 3.8 mm, and more than 3.8 mm and less than or equal to 6.5 mm, setting the first threshold value for the average temperature Tₐᵥₑ at 865°C, 938°C, 886°C, 954°C, 1000°C, and 1000°C, respectively, enabled all occurrences of expulsion to be detected for steel strips 2 having the sheet thickness of more than or equal to 1 mm and less than or equal to 6.5 mm.

In the example, it was also confirmed that, when expulsion occurred, the temperature difference ΔT had a tendency to increase. There was no difference in the tendency depending on the sheet thickness, differing from the case of the average temperature Tₐᵥₑ. However, it was also confirmed that, even under the condition of no expulsion having occurred, there was a condition, among variations, that causes the temperature difference ΔT to have approximately the same value as a temperature difference ΔT when expulsion has occurred. In the example, it was confirmed that setting the second threshold value for the temperature difference ΔT at 110°C enabled all occurrences of expulsion to be detected under any conditions.

Further, it was confirmed that combining conditions relating to the average temperature Tₐᵥₑ and the temperature difference ΔT and setting the first threshold value and the second threshold value as specified by the above-described conditions enabled only a condition under which expulsion occurred to be detected. That is, it was confirmed that, as in the above-described embodiment, determination based on two conditions relating to the average temperature Tₐᵥₑ and the temperature difference ΔT of the joint portion enabled occurrence of expulsion to be detected with high accuracy. In PTL 1, in a region where an overlap thickness is more than or equal to 1.5 mm, it was not possible to detect a joining defect due to high temperature at the joint portion. However, it was confirmed that, according to the above-described example, even in a region where a sheet thickness is thicker than that in PTL 1, it was possible to detect high temperature at the joint portion, that is, a joining defect due to expulsion.

### Reference Signs List

- 1: Welding determination device
- 11: Measurement unit
- 12: Storage unit
- 13: Determination unit
- 2: Steel strip
- 21: Preceding strip
- 22: Succeeding strip
- 3: Seam welding machine
- 31: Frame body
- 32a, 32b: Electrode roll
- 33a, 33b: Swaging roll
- 34, 35: Pressurizing cylinder
- 36: Wheel

## Claims

1. A welding determination device for strip-shaped sheets comprising:
a measurement unit configured to measure temperature of a joint portion between strip-shaped sheets to be joined by seam welding; and
a determination unit configured to, based on a measurement result by the measurement unit, calculate an average temperature and a temperature difference of the joint portion and, when the average temperature is more than or equal to a first threshold value that is set according to the sheet thickness of each of the strip-shaped sheets and the temperature difference is less than or equal to a second threshold value, determine that expulsion has occurred at the joint portion.

2. A welding determination method for strip-shaped sheets comprising:
a measurement step of measuring temperature of a joint portion between strip-shaped sheets to be joined by seam welding;
a calculation step of, based on a measurement result in the measurement step, calculating an average temperature and a temperature difference of the joint portion; and
a determination step of, when the average temperature is more than or equal to a first threshold value that is set according to the sheet thickness of each of the strip-shaped sheets and the temperature difference is less than or equal to a second threshold value, determining that expulsion has occurred at the joint portion.
